(19) Europäisches Patentamt
European Patent Office
Office européen des brevets

(11) **EP 4 636 715 A1**

(12) **EUROPEAN PATENT APPLICATION**
published in accordance with Art. 153(4) EPC

(43) Date of publication:
**22.10.2025 Bulletin 2025/43**

(21) Application number: **23902772.5**

(22) Date of filing: **13.12.2023**

(51) International Patent Classification (IPC):
**G06V 40/18** (2022.01)    **G06N 3/0464** (2023.01)
**G06N 3/08** (2023.01)    **G06V 10/764** (2022.01)
**G06V 10/82** (2022.01)

(52) Cooperative Patent Classification (CPC):
**G06N 3/0464; G06N 3/08; G06V 10/764;**
**G06V 10/82; G06V 40/18**

(86) International application number:
**PCT/CN2023/138591**

(87) International publication number:
**WO 2024/125578 (20.06.2024 Gazette 2024/25)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **14.12.2022  CN 202211610186**

(71) Applicant: **Nanchang Virtual Reality Research**
**Institute**
**Co., Ltd.**
**Nanchang, Jiangxi 330013 (CN)**

(72) Inventors:
• **FU, Yang**
  **Nanchang, Jiangxi 330013 (CN)**
• **XU, Hao**
  **Nanchang, Jiangxi 330013 (CN)**

(74) Representative: **Metida**
**Gyneju str. 16**
**01109 Vilnius (LT)**

(54) **GAZE INFORMATION DETERMINATION METHOD AND APPARATUS, AND EYE MOVEMENT TRACKING DEVICE**

(57) This application provides a method and apparatus for determining gaze information, and an eye-tracking device, applied to an eye-tracking device, including: acquiring two eye images; determining respective target feature points of the two eye images and determining respective confidence levels corresponding to the two eye images; determining first gaze information of the second eye image based on the target feature points of the second eye image in a case that the confidence level corresponding to a first eye image of the two eye images is less than a preset confidence level and that the confidence level corresponding to a second eye image of the two eye images is greater than or equal to the preset confidence level, and determining the first gaze information as first gaze information of the first eye image; inputting the two eye images respectively into a gaze estimation model to obtain respective second gaze information of the two eye images; and determining target gaze information corresponding to the two eye images based on the first gaze information and the second gaze information. This application can improve the accuracy of target gaze information.

FIG. 4

## Description

### TECHNICAL FIELD

This application relates to the field of eye-tracking technologies, and more particularly, to a method and apparatus for determining gaze information and an eye-tracking device.

### BACKGROUND

Eye-tracking technologies involve projecting a set of infrared lights onto eyes of a user, capturing eye images through a camera, and analyzing image features of the eye region to detect key characteristics of the human eyes and calculate the gaze direction or gaze point position of the human eyes. In current eye-tracking technologies, reliable image data acquired from both the left and right eyes are required, then based on the acquired image data, a gaze estimation algorithm is used to determine the gaze direction or gaze point position. However, due to the compact layout of many wearable eye-tracking devices, the camera needs to capture eye images at a large angle, resulting in the captured eye gaze direction being far from the camera. This makes traditional eye-tracking methods difficult to apply, leading to low accuracy in determining gaze information. Therefore, how to improve the accuracy of gaze information determination remains an urgent problem to be solved.

### SUMMARY

In view of the above problems, embodiments of this application provide a method and apparatus for determining gaze information and an eye-tracking device, to mitigate the above problems.

According to an aspect of embodiments of this application, a method for determining gaze information is provided, where the method is applied to an eye-tracking device and includes: acquiring two eye images acquired by the eye-tracking device; determining respective target feature points of the two eye images and determining respective confidence levels corresponding to the two eye images based on the respective target feature points of the two eye images; determining first gaze information of the second eye image based on the target feature points of the second eye image in a case that the confidence level corresponding to a first eye image of the two eye images is less than a preset confidence level and that the confidence level corresponding to a second eye image of the two eye images is greater than or equal to the preset confidence level, and determining the first gaze information as first gaze information of the first eye image; inputting the two eye images respectively into a gaze estimation model to obtain respective second gaze information of the two eye images output by the gaze estimation model; and determining target gaze information corresponding to the two eye images based on the first gaze information of the first eye image, the first gaze information of the second eye image, the second gaze information of the first eye image, and the second gaze information of the second eye image.

According to an aspect of embodiments of this application, an apparatus for determining gaze information is provided, where the apparatus is applied to an eye-tracking device and includes: an image acquisition module configured to acquire two eye images acquired by the eye-tracking device; a target feature point determination module configured to determine respective target feature points of the two eye images and determine respective confidence levels corresponding to the two eye images based on the respective target feature points of the two eye images; a first gaze information determination module configured to determine first gaze information of a second eye image based on the target feature points of the second eye image in a case that the confidence level corresponding to a first eye image of the two eye images is less than a preset confidence level and that the confidence level corresponding to the second eye image of the two eye images is greater than or equal to the preset confidence level, and determine the first gaze information as first gaze information of the first eye image; a second gaze information determination module configured to input the two eye images respectively into a gaze estimation model to obtain respective second gaze information of the two eye images output by the gaze estimation model; and a target gaze information determination module configured to determine target gaze information corresponding to the two eye images based on the first gaze information of the first eye image, the first gaze information of the second eye image, the second gaze information of the first eye image, and the second gaze information of the second eye image.

According to an aspect of embodiments of this application, an eye-tracking device is provided, where the eye-tracking device includes: an image capture apparatus and a device body, the image capture apparatus being disposed at a target position of the device body, where the target position is a position located at a cheek side and/or a nose side of a target object when the eye-tracking device is worn by the target object.

In the solution of this application, target feature points are first determined in the acquired two eye images, and respective confidence levels corresponding to the two eye images are determined based on the respective target feature points. When it is determined that a confidence level corresponding to one eye image is greater than or equal to a preset confidence level and a confidence level corresponding to the other eye image is less than the preset confidence level, first gaze information is calculated for the eye image with the confidence level greater than the preset confidence level, and the first gaze information is also used as the first gaze information of the other eye image. Then, the two eye images are input into a gaze estimation model for determination of second gaze information, enabling determination of target gaze information based on the first gaze information and the second gaze information corresponding to the two eye images.

In this application, the confidence levels of the two eye images are used to determine whether to combine model predictions to determine target gaze information, which improves the accuracy of target gaze information and the adaptability and robustness of the eye-tracking device. In addition, the shooting angle of the image capture apparatus of the eye-tracking device is optimized, avoiding the issue of both cameras having suboptimal shooting angles and providing high-quality image data for gaze information determination. Furthermore, validity assessments can be made based on image data of a single eye, and target gaze information can be determined in combination with model predictions, addressing the binocular constraint problem in eye-tracking algorithms.

It should be understood that the above general description and the detailed description below are only illustrative and explanatory and do not limit the present invention.

## BRIEF DESCRIPTION OF DRAWINGS

The accompanying drawings, which are incorporated in and constitute a part of this specification, illustrate embodiments consistent with this application and, together with the specification, serve to explain the principles of this application. Apparently, the accompanying drawings in the following description show merely some embodiments of this application, and persons of ordinary skill in the art may still derive other drawings from these accompanying drawings without creative efforts.

FIG. 1 is a schematic diagram of an eye-tracking device according to an embodiment of this application.

FIG. 2 is a schematic diagram of an eye-tracking device according to another embodiment of this application.

FIG. 3 is an exploded view of an eye-tracking device according to an embodiment of this application.

FIG. 4 is a flowchart of a method for determining gaze information according to an embodiment of this application.

FIG. 5 is a flowchart of specific steps of step 230 according to an embodiment of this application.

FIG. 6 is a flowchart of step 240 according to an embodiment of this application.

FIG. 7 is a flowchart of a method for determining gaze information according to another embodiment of this application.

FIG. 8 is a flowchart of specific steps of step 330 according to an embodiment of this application.

FIG. 9 is a flowchart of a method for determining gaze information according to yet another embodiment of this application.

FIG. 10 is a flowchart of a method for determining gaze information according to still another embodiment of this application.

FIG. 11 is a flowchart of specific steps of step 560 according to an embodiment of this application.

FIG. 12 is a block diagram of an apparatus for determining gaze information according to an embodiment of this application.

FIG. 13 is a schematic structural diagram of a computer system suitable for implementing an eye-tracking device according to an embodiment of this application.

## DESCRIPTION OF EMBODIMENTS

Example embodiments will now be described more fully with reference to the accompanying drawings. However, the example embodiments can be implemented in a variety of forms, and should not be construed as limited to the embodiments described herein. On the contrary, by providing these embodiments, this application will be comprehensive and complete, and the conception of the example embodiments will be fully communicated to those skilled in the art.

Furthermore, the described features, structures, or characteristics may be combined in any suitable manner in one or more embodiments. In the following description, numerous specific details are provided to give a thorough understanding of embodiments of this application. Those skilled in the art will recognize, however, that the technical solution of this application can be practiced without one or more of the specific details, or with other methods, components, apparatuses, steps, or the like. In other instances, well-known methods, apparatuses, implementations, or operations are not shown or described in detail to avoid obscuring aspects of this application.

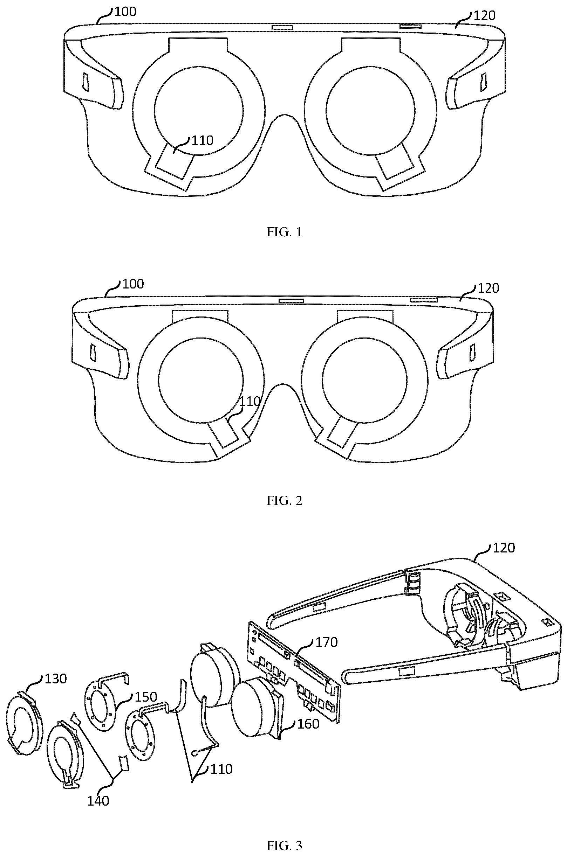

FIG. 1 is a schematic diagram of an eye-tracking device according to an embodiment of this application. As shown in FIG. 1, the eye-tracking device 100 includes an image capture apparatus 110 and a device body 120, where the image capture apparatus 110 is disposed at a target position of the device body 120. Optionally, the target position is a position located at a cheek side of a target object when the eye-tracking device 100 is worn by the target object, as shown in FIG. 1. In some other embodiments, the target position may alternatively be a position located at a nose side of the target object when the eye-tracking device 100 is worn by the target object, as shown in FIG. 2, where the image capture apparatus 110 is disposed at a target position of the device body 120, the target position being a position located at the nose side of the target object when the eye-tracking device 100 is worn by the target object. The target object refers to an object wearing the eye-tracking device 100. As shown in FIG. 3, optionally, the eye-tracking device 100 further includes a lampshade 130, a filter 140, a light source circuit board 150, an optical engine 160, and a main board 170. The main board 170 is located in the device body 120; two recessed structures are provided in the device body 120, and the lampshade 130, the filter 140, the light source circuit board 150, and the optical engine 160 are all disposed in the recessed structures. The optical engine 160 is disposed at the innermost layer of the recessed structure, the light source circuit board is disposed on the optical engine 160, the image capture apparatus 110 is located between the optical engine 160 and the light source circuit board 150, and the image capture apparatus 110 is placed at the target position. The filter 140 is disposed in front of the light source circuit board 150, at the same position as the image capture apparatus 110, and the lampshade 130 is disposed at the outermost layer of the recessed structure.

Optionally, in capturing images of the eyes of the target object through the image capture apparatus 110, the eye-tracking device 100 may capture eye images at a target tilt angle. The target tilt angle refers to an angle between an axial direction of the image capture apparatus 110 (a direction from a center point of the image capture apparatus to an optical center of a lens of the image capture apparatus 110) and a direction of an optical axis, where the target tilt angle is greater than 50°. In other embodiments, the target tilt angle may differ.

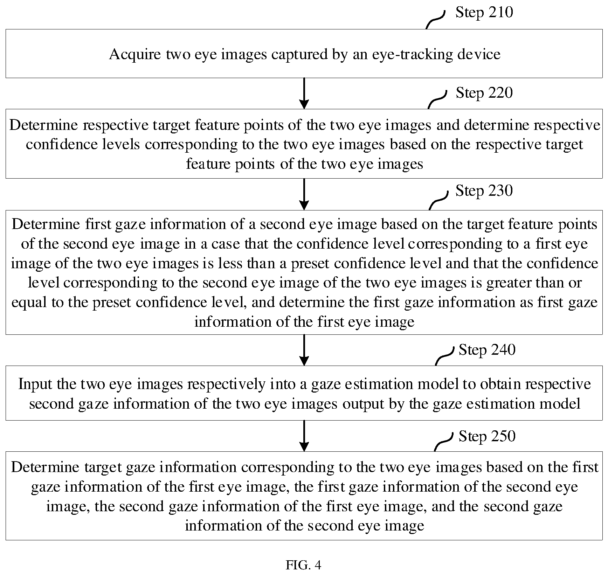

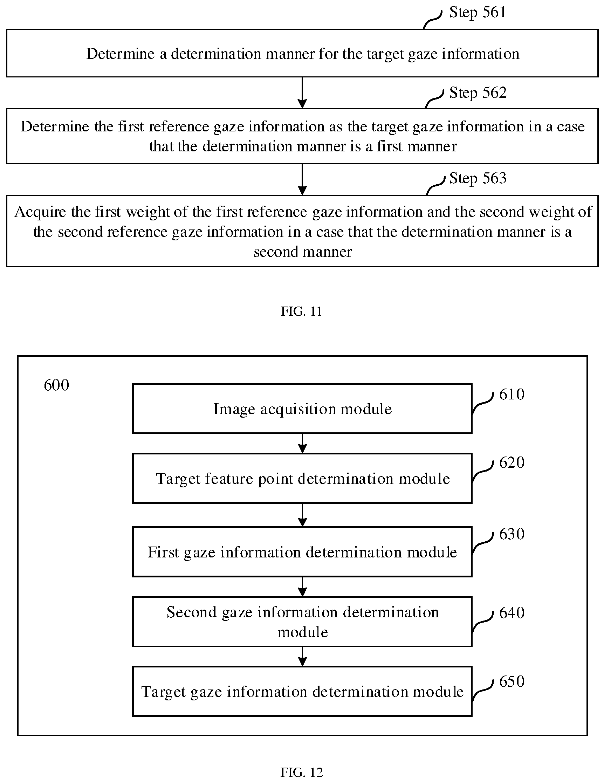

Referring to FIG. 4, FIG. 4 shows a method for determining gaze information according to an embodiment of this application. In specific embodiments, the method for determining gaze information may be applied to an apparatus 600 for determining gaze information as shown in FIG. 12 and an eye-tracking device 100 (FIG. 1 or FIG. 2) configured with the apparatus 600 for determining gaze information. The specific process of this embodiment will be described below. Of course, it can be understood that the method may be executed by an eye-tracking device, where the eye-tracking device includes an image capture apparatus and a device body, the image capture apparatus being disposed at a target position of the device body. The target position is a contact position located at a cheek side and/or a nose side of a target object when the eye-tracking device is worn by the target object. The process shown in FIG. 4 will be elaborated in detail below, and the method for determining gaze information may specifically include the following steps.

Step 210. Acquire two eye images captured by the eye-tracking device.

In one approach, under infrared light irradiation, a pupil region in the captured eye image appears black, known as the dark pupil effect. In addition, under infrared light irradiation, the infrared light source forms a high-brightness glint through corneal reflection, also known as a Purkinje image. The dark pupil effect enhances the contrast between the pupil and the glint. Since changes in the eye gaze direction cause changes in the pupil center and glint position, eye images collected under an infrared light source can be used for eye-tracking. In one approach, an infrared light source may be installed on the eye-tracking device, and the infrared light source is activated during eye image capture to collect eye images under infrared light irradiation.

In one approach, after the two eye images are captured by the eye-tracking device, to improve the accuracy of gaze information determination, denoising processing is performed on the two eye images.

Step 220. Determine respective target feature points of the two eye images and determine respective confidence levels corresponding to the two eye images based on the respective target feature points of the two eye images.

In one approach, target feature points refer to glints in the two eye images that satisfy a preset condition. The preset condition is satisfied if that within the glints of the two eye images, there exist points that conform to the elliptic equation corresponding to the pupil in each eye image. Optionally, an ellipse fitting method may be used to determine the target feature points. The ellipse fitting algorithm involves finding an ellipse that is as close as possible to a given set of sample points. In other words, all glints in the image are fitted using an elliptic equation as a model, so that a single elliptic equation includes the maximum number of glints. The glints satisfying this elliptic equation are identified as the target feature points.

In one approach, a number of target feature points and a total number of glints in each of the two eye images are counted, and a proportion of the number of target feature points to the total number of glints is calculated for each of the two eye images. The proportion is used as the confidence level of the corresponding eye image.

Step 230. Determine first gaze information of a second eye image based on the target feature points of the second eye image in a case that the confidence level corresponding to a first eye image of the two eye images is less than a preset confidence level and that the confidence level corresponding to the second eye image of the two eye images is greater than or equal to the preset confidence level, and determine the first gaze information as first gaze information of the first eye image.

In one approach, the first gaze information may include a gaze direction and a gaze point of the corresponding eye image. Optionally, in step 220, an environmental image capture apparatus may be provided to capture a scene image viewed by the human eyes. After the target feature points are determined using the ellipse fitting algorithm, an equation of an ellipse corresponding to the second eye image may be determined based on the determined target feature points, and then an elliptical parameter area is determined, and with the elliptical parameter and positional information of the target feature points, a pupil center is determined. A homography mapping method is then used to map coordinates of the pupil center in the second eye image to the scene image, establishing a mapping relationship between the pupil center of the second eye image and the scene image. In the homography mapping method, there is a one-to-one mapping between the eye image coordinate system and the scene image coordinate system. Then the gaze direction or gaze point in the second eye image may be determined based on the mapping relationship between the pupil center of the second eye image and the scene image.

Optionally, to determine the mapping relationship between the pupil center of the eye image and the scene image, calibration is required during use of the eye-tracking device. Optionally, a nine-point calibration method may be used to calibrate the eye-tracking device. The nine-point calibration method involves using a laser emitter fixed on the eye-tracking device to sequentially emit nine laser beams in different directions, projecting them onto a screen or object in front of eyes of the user, while the eyes of the user continuously gaze at the nine glints appearing in front. A correspondence determined between coordinates of the pupil center in the eye image and coordinates of the corresponding glint in the scene image when the user gazes at each glint is used to establish a mapping transformation matrix between the two images, thereby achieving the purpose of calibration.

In one approach, during eye image capture, it cannot be guaranteed that the confidence levels of two eye images captured each time are greater than or equal to the preset confidence level. In current technologies, when a confidence level of one eye image is less than the preset confidence level, that eye image cannot be used, leading to an inability to determine gaze information or significant differences between the determined gaze information and the actual gaze information of the eye. To avoid such a situation, when a confidence level corresponding to any one of the two eye images is less than the preset confidence level, based on a binocular parallel gaze assumption, the first gaze information determined for the other eye image is also used as the first gaze information of the eye image with a confidence level less than the preset confidence level.

In another approach, if it is determined that the respective confidence levels corresponding to two eye images are both greater than the preset confidence level, the gaze information of each of the two eye images is determined directly based on the mapping relationship between the pupil center of each of the two eye images and the scene image. The gaze information of the two eye images is then fused to determine the target gaze information.

In yet another approach, if it is determined that the confidence levels corresponding to two eye images are less than the preset confidence level, two new eye images need to be acquired. This situation may also occur because the eye-tracking device needs to be adjusted due to potential issues, or the user has adjusted the wearing position of the eye-tracking device.

In one approach, if coordinates of a pupil center determined through the ellipse fitting algorithm fall outside the central region of the image, it indicates that the current gaze point or gaze direction is at an extreme position on a plane. In this case, the confidence level determined is typically low because this situation may result in problems such as an incomplete corneal display region or pupil center deviation, causing the ellipse fitting algorithm to fail to fit a complete corneal region, leading to an increase in outliers. However, this situation does not mean that good eye feature points cannot be found. Therefore, the confidence level threshold may be attenuated proportionally. Optionally, a two-dimensional Gaussian distribution may be used, and a good attenuation coefficient is obtained by adjusting a covariance matrix.

The covariance matrix is given by $f(X) = \frac{1}{2\pi^{\frac{d}{2}}} exp\left\{-\frac{1}{2}(X-\mu)^T[\sum(X-\mu)]^{-1}\right\}$, $X = [(x_1,y_1)(x_2,y_2)\cdots(x_n,y_n)]$, where d is 2, $\mu$ is the mean, X is a set of coordinate values of pupil centers determined by the ellipse algorithm, $x_1$ to $x_n$ are abscissas corresponding to multiple pupil centers determined by the ellipse fitting algorithm, and $y_1$ to $y_n$ are ordinates corresponding to multiple pupil centers determined by the ellipse fitting algorithm.

In another approach, confidence level thresholds may vary for different users. For some users, the number of outliers may be significantly higher than for others. In such cases, using a fixed confidence level may degrade the user experience, as model predictions may be triggered. To address this, results from initial n images are collected and analyzed, results determined based on the algorithm and results determined based on the model are compared, an average confidence level based on the algorithm is calculated, and the confidence level threshold is adjusted accordingly.

In yet another approach, temporal information is instructive for adjusting the confidence level threshold. Typically, changes between consecutive frames of eye images captured by the eye-tracking device are not significant. If one frame in a stable sequence performs very poorly (that is, differs significantly from preceding and following frames), it may indicate an error in the captured images. In this case, the threshold may be lowered, or the current frame may be discarded.

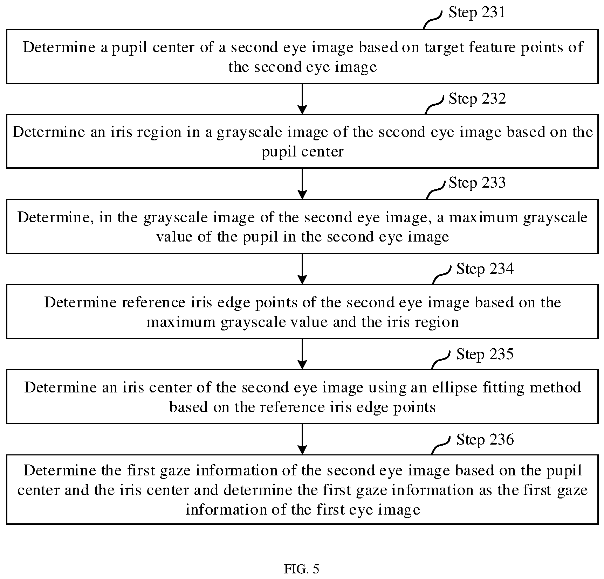

In some embodiment, as shown in FIG. 5, step 230 includes the following steps.

Step 231. Determine a pupil center of the second eye image based on the target feature points of the second eye image.

In one approach, the second eye image is first converted into a grayscale image. In the grayscale image of the second eye image, an estimated pupil center is randomly selected in a pupil region. A difference is calculated between a grayscale value of the estimated pupil center and grayscale values corresponding to all glints in the image. Glints with a difference less than a difference threshold are used as pupil contour points. Based on the determined pupil contour points, an ellipse fitting algorithm is used to determine parameters with the estimated pupil center as the ellipse center, and the number of glints in the second eye image that form a subset of the ellipse is determined. Another estimated pupil center is then randomly selected in the pupil region for calculation, and this process is iterated. Based on the number of glints in the second eye image that form a subset of the corresponding ellipse, the ellipse with the greatest number of glints is used as the ellipse corresponding to the pupil contour. The glints in the subset corresponding to the ellipse are used as target feature points, and the pupil center of the second eye image is determined based on the target feature points. The second eye image may be an eye image of the left or right eye captured under infrared light irradiation.

In one approach, as glints caused by infrared light irradiation may fall on the pupil boundary and cause occlusion, high-brightness points in the grayscale image corresponding to the second eye image are first identified as corneal reflection glints. A multivariate Gaussian distribution is used to model the structure of the glints, and finally, a radial interpolation algorithm is used to remove glints falling on the pupil boundary.

Step 232. Determine an iris region in a grayscale image of the second eye image based on the pupil center.

Based on the human eye structure, a direction of a line connecting a three-dimensional pupil center and a three-dimensional iris center represents the gaze direction of the human eye. Therefore, the gaze direction or gaze point position of the human eye can be determined based on a two-dimensional pupil center and a two-dimensional iris center in the eye image.

In one approach, the iris region in the grayscale image of the second eye image may be determined by performing iris recognition on the grayscale image of the second eye image, and the iris center of the eye in the second eye image can then be determined within the identified iris region. Optionally, since the iris, pupil, and sclera (white of the eye) exhibit different effects in the grayscale image due to differences in grayscale values, preliminary iris recognition can be performed on the grayscale image of the second eye image. Optionally, the iris region in the grayscale image of the second eye image may further be recognized using a circular difference algorithm.

In another approach, to achieve high contrast in the iris region in the grayscale image of the second eye image, the grayscale values of the pixels in the grayscale image of the second eye image may be nonlinearly stretched using a histogram equalization algorithm, thereby enhancing the iris region.

Step 233. Determine, in the grayscale image of the second eye image, a maximum grayscale value of the pupil in the second eye image.

In one approach, the maximum grayscale value of the pupil may be determined by comparing grayscale values of the pupil of the second eye image in the grayscale image of the second eye image. The quantized pixel value is represented by one byte (8 bits). For example, continuously changing grayscale values from black to gray to white are quantized into 256 grayscale levels, with a grayscale value range of 0 to 255, representing brightness from dark to light, corresponding to colors from black to white in the grayscale image.

Step 234. Determine reference iris edge points of the second eye image based on the maximum grayscale value and the iris region.

In one approach, since the pupil is within the iris region, a grayscale value corresponding to the iris region should be between the maximum grayscale value of the pupil and 255. If the maximum grayscale value of the pupil is $T_{max}$, the grayscale value of the iris region falls within the range of ($T_{max}$, 255). A median value of the grayscale values is calculated and used as an initial threshold. Then iterative calculations are performed based on the initial threshold to determine a target threshold for iris segmentation. The iris segmentation is then performed on the grayscale image of the second eye image based on the target threshold, and finally, the recognition is performed on the eye image after iris segmentation to determine the reference iris edge points of the second eye image. The initial threshold may be determined by $\frac{T_{max}+255}{2}$.

Based on this initial threshold, a first average value of the grayscale values greater than the initial threshold and a second average value of the pixels with grayscale values less than the initial threshold are determined from the grayscale image. A third average value is then determined based on the first average value and second average value, where the third average value is an average of the first average value and the second average value. Finally, a difference between the third average value and the initial threshold is calculated. If the difference is not zero, the third average value is used as a new initial threshold, and the above steps are repeated until the difference becomes zero or the repetition count reaches a count threshold, thereby obtaining the threshold for iris segmentation. The iris is then segmented based on this threshold, and the reference iris edge points of the second eye image are determined. A greater repetition count provides more significant impact on the confidence level. When the repetition count is greater than a preset count, a confidence coefficient is generated, and the confidence coefficient needs to be multiplied in calculation of the confidence level.

Optionally, after segmentation of the iris of the second eye image, glints on the iris boundary are determined based on the glints and the segmented iris region, and these glints are used as reference iris edge points.

Step 235. Determine an iris center of the second eye image using an ellipse fitting method based on the reference iris edge points.

In one approach, the method in step 231 is used to determine elliptical parameters of the iris boundary, where the ellipse center in the elliptical parameters is the iris center.

Step 236. Determine the first gaze information of the second eye image based on the pupil center and the iris center and determine the first gaze information as the first gaze information of the first eye image.

In one approach, two-dimensional coordinates of the pupil center and the iris center in the second eye image are mapped to three-dimensional coordinates, and the pupil center and the iris center in the three-dimensional coordinate system are connected to determine the first gaze information of the second eye image.

In one approach, after the first gaze information is determined, a relationship between the pupil center, the corneal center, and the first gaze information in the second eye image is learned, and the eye corresponding to the second eye image can be continuously tracked based on this relationship, thereby achieving eye tracking.

Continuing to refer to FIG. 4. Step 240. Input the two eye images respectively into a gaze estimation model to obtain respective second gaze information of the two eye images output by the gaze estimation model.

In one approach, the gaze estimation model is used to determine a gaze direction of an eye corresponding to an eye image based on feature information of the eye in the eye image. Optionally, the feature information of the eye includes a corneal center, a pupil center, glints, and the like of the eye corresponding to the eye image, without limitation herein.

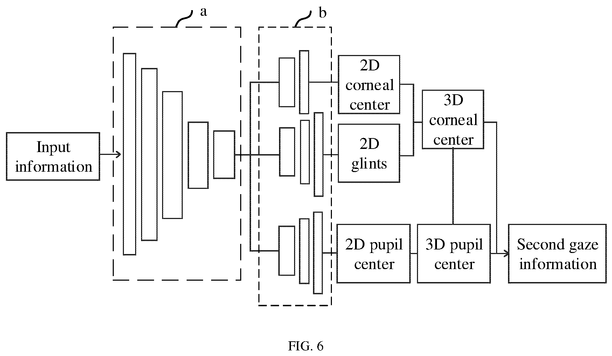

Optionally, the gaze estimation model may include a feature extraction layer and a gaze estimation layer, where the feature extraction layer is used to extract feature information from the two eye images, and the gaze estimation layer performs recognition and calculation based on the feature information extracted by the feature extraction layer to obtain the respective second gaze information corresponding to the two eye images. Optionally, the gaze estimation layer may be a deconvolution layer. As shown in FIG. 6, in FIG. 6, the gaze estimation model may include a feature extraction layer a and a deconvolution layer b. The eye image is taken as input information for the gaze estimation model. The feature extraction layer a first extracts feature information from the eye image, and based on the extracted feature information, the deconvolution layer b determines a two-dimensional corneal center, two-dimensional glints, and a two-dimensional pupil center. Three-dimensional mapping is then performed on the two-dimensional corneal center, two-dimensional glints, and two-dimensional pupil center to obtain a three-dimensional corneal center and a three-dimensional pupil center. An optical axis of the eye is determined based on the three-dimensional corneal center and the three-dimensional pupil center; and the second gaze information is determined based on this optical axis.

Optionally, during the recognition and calculation performed by the deconvolution layer based on the feature information extracted by the feature extraction layer, the deconvolution layer first identifies the two-dimensional coordinate information of features from the extracted feature information, and then converts the two-dimensional coordinate information into three-dimensional coordinate information. Since the determined features include the pupil center and the corneal center, the optical axis information of the eye image can be determined. Furthermore, as there exists a Kappa (Kappa) angle between the optical axis and a visual axis, visual axis information of the eye image can be determined based on the Kappa angle, thereby obtaining the second gaze information of the eye image.

In another approach, before the second gaze information is determined, the first eye image and its first gaze information, along with the second eye image and its first gaze information, may be used as training data for the gaze estimation model. The gaze estimation model may be trained in real time using this training data to adjust its parameters, thereby enabling the gaze estimation model to be adapted to different target objects. The gaze estimation can be performed for eyes of different target objects through the gaze estimation model.

In yet another approach, after the second gaze information is determined, the gaze estimation model is trained using the second gaze information and corresponding eye images to learn the eye characteristics of the user of the eye-tracking device. This facilitates continuous eye tracking and improves the speed at which the estimation model determines the second gaze information.

Step 250. Determine target gaze information corresponding to the two eye images based on the first gaze information of the first eye image, the first gaze information of the second eye image, the second gaze information of the first eye image, and the second gaze information of the second eye image.

In one approach, first reference gaze information corresponding to the eyes of the two eye images may first be determined by fusing the first gaze information of the first eye image and the first gaze information of the second eye image. Optionally, this fusion may incorporate calculating an average value of the first gaze information of the first eye image and the first gaze information of the second eye image. It can be understood that the same method can be used to determine respective second reference gaze information corresponding to the eyes of the two eye images through fusion, and finally, the target gaze information is determined based on the first reference gaze information and the second reference gaze information.

In another approach, from a physiological perspective, each person has a dominant eye, which may be the left or right eye. The dominant eye receives visual information with higher priority in the brain, meaning there exists a certain parallax between the positional information of an object observed by the dominant eye and that observed by the auxiliary eye. The positional information observed by the dominant eye more closely matches the actual position of the object. To reduce the increase in parallax caused by the disadvantage of the auxiliary eye, when determining the first and second reference gaze information, pre-set weight coefficients corresponding to each eye image are obtained. These weight coefficients are pre-configured by the user based on their dominant and auxiliary eyes. Optionally, the weight coefficient of the dominant eye is set greater than that of the auxiliary eye.

In the embodiments of this application, target feature points are first determined in the acquired two eye images, and respective confidence levels corresponding to the two eye images are determined based on the respective target feature points. When it is determined that a confidence level corresponding to one eye image is greater than or equal to a preset confidence level and a confidence level corresponding to the other eye image is less than the preset confidence level, first gaze information is calculated for the eye image with the confidence level greater than the preset confidence level, and the first gaze information is also used as the first gaze information of the other eye image. Then, the two eye images are input into a gaze estimation model for determination of second gaze information, enabling determination of target gaze information based on the first gaze information and the second gaze information corresponding to the two eye images.

In this application, the confidence levels of the two eye images are used to determine whether to combine model predictions to determine target gaze information, which improves the accuracy of target gaze information and the adaptability and robustness of the eye-tracking device. In addition, the shooting angle of the image capture apparatus of the eye-tracking device is optimized, avoiding the issue of both cameras having suboptimal shooting angles and providing high-quality image data for gaze information determination. Furthermore, validity assessments can be made based on image data of a single eye, and target gaze information can be determined in combination with model predictions, addressing the binocular constraint problem in eye-tracking algorithms.

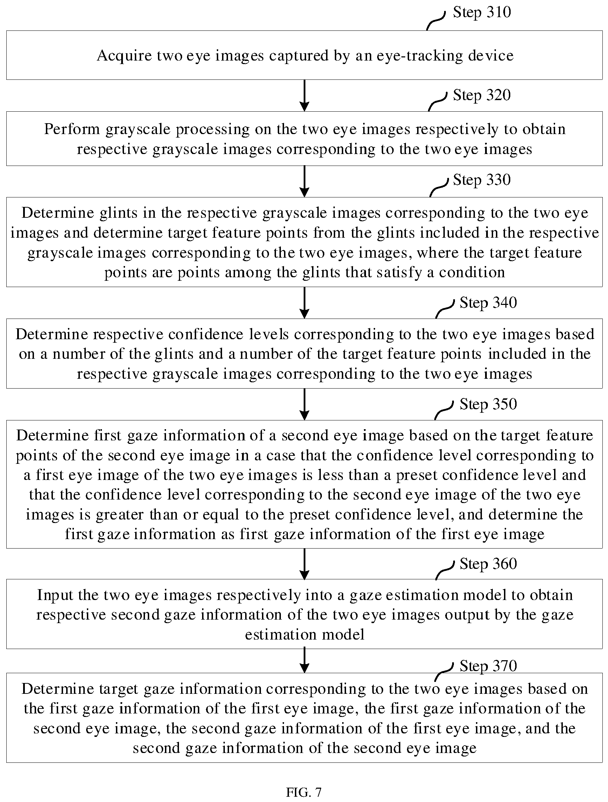

Referring to FIG. 7, FIG. 7 shows a method for determining gaze information according to an embodiment of this application. The process shown in FIG. 7 will be elaborated in detail below, and the method for determining gaze information may specifically include the following steps.

Step 310. Acquire two eye images captured by the eye-tracking device.

Step 320. Perform grayscale processing on the two eye images respectively to obtain respective grayscale images corresponding to the two eye images.

In one approach, in an RGB image, when $R = G = B$, the color represents a grayscale tone, where the $R = G = B$ value is called the grayscale value. Accordingly, in a grayscale image, each pixel requires only one byte to store the grayscale value (also referred to as intensity or luminance), with a range from 0 to 255. A grayscale of 255 indicates maximum brightness (pure white), while 0 indicates minimum brightness (pure black). To obtain grayscale images of the two eye images, image grayscale processing may be performed using the maximum method, average method, or weighted average method. Optionally, in the maximum method, a maximum value among the R, G, and B components is directly taken (with 0 as the minimum and 255 as the maximum), and that value is assigned to other components, expressed as: $R = G = B = \max(R, G, B)$. In the average method: a mean of the R, G, and B component values is calculated and assigned to other components, expressed as: $R = G = B = (R + G + B) / 3$. In the weighted average method, a weighted average of the R, G, and B components is performed according to their perceptual importance or other criteria. As the human eye is most sensitive to green and least sensitive to blue, the grayscale value can be calculated as $GRAY = R \times 0.299 + G \times 0.587 + B \times 0.114$ to obtain a more reasonable grayscale image through weighted averaging of the RGB components.

Step 330. Determine glints in the respective grayscale images corresponding to the two eye images and determine target feature points from the glints included in the respective grayscale images corresponding to the two eye images, where the target feature points are points among the glints that satisfy a condition.

In one approach, in a grayscale image, since corneal reflection under infrared light irradiation forms high-brightness glints, during grayscale processing, the brightness of the glints is greater than that of other regions, meaning that grayscale values at the positions of the glints are greater than grayscale values of other pixels, and the grayscale values at the positions of the glints are close to 255. Therefore, glints in the two eye images can be determined by identifying points with grayscale values close to 255.

In one approach, in a grayscale image corresponding each eye image, an estimated pupil center is randomly selected in a pupil region. A difference is calculated between a grayscale value of the estimated pupil center and grayscale values corresponding to all glints in the corresponding grayscale image. Glints with a difference less than a difference threshold are used as pupil contour points. Based on the determined pupil contour points, an ellipse fitting algorithm is used to determine parameters with the estimated pupil center as the ellipse center, and the number of glints corresponding to the two eye images that form a subset of the ellipse is determined. Another estimated pupil center is then randomly selected in the pupil region for calculation, and this process is iterated. Based on the number of corresponding glints in the corresponding eye image that form a subset of the corresponding ellipse, the ellipse with the greatest number of glints is used as the ellipse corresponding to the pupil contour. The glints in the subset corresponding to the ellipse are used as target feature points.

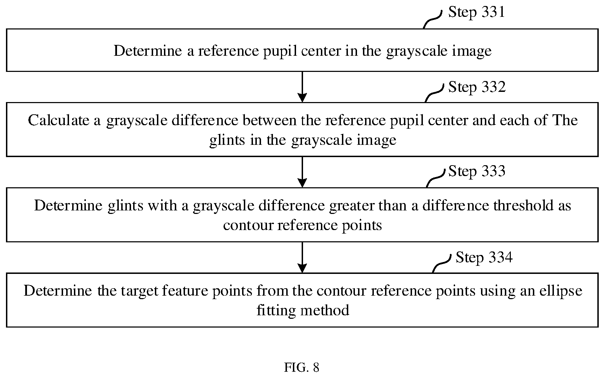

In some embodiment, for the respective grayscale images corresponding to the two eye images, as shown in FIG. 8, step 330 includes the following steps.

Step 331. Determine a reference pupil center in the grayscale image.

In one approach, a point is randomly selected in a region where the pupil is located as a reference pupil center. Optionally, after pupil contour reference points are determined with the current reference pupil center, other reference pupil centers are randomly selected for multiple iterations to determine as many contour reference points as possible, thereby increasing the accuracy of the determined target feature points.

Step 332. Calculate a grayscale difference between the reference pupil center and each of the glints in the grayscale image.

In one approach, after grayscale processing of the eye image, each pixel has its own grayscale value. Glints on an ellipse corresponding to a pupil boundary with each reference pupil center as the center may be further determined by calculating a difference between grayscale values of each glint and a grayscale value of the reference pupil center.

Step 333. Determine glints with a grayscale difference greater than a difference threshold as contour reference points.

In one approach, when a grayscale difference between the reference pupil center and any glint is greater than a difference threshold, the glint is determined to satisfy the requirements for being a pupil contour reference point. The difference threshold may be set based on actual needs, without specific limitation herein.

Step 334. Determine the target feature points from the contour reference points using an ellipse fitting method.

In one approach, since not all contour reference points are pupil contour points, to determine points closest to the pupil boundary contour in the eye image, an ellipse fitting algorithm is used to determine points closest to the pupil boundary contour from the contour reference points, and these determined points closest to the pupil boundary contour are referred to as target feature points. A random sample consensus (RANSAC) algorithm is used to fit and determine an equation of an ellipse of the pupil boundary multiple times, the number of contour reference points lying on each elliptic equation is counted, and the elliptic equation with the highest number of contour reference points is determined as the elliptic equation of the pupil boundary. The contour reference points on this elliptic equation are used as target feature points.

Continuing to refer to FIG. 7. Step 340. Determine respective confidence levels corresponding to the two eye images based on a number of the glints and a number of the target feature points included in the respective grayscale images corresponding to the two eye images.

In one approach, a proportion of the target feature points to the glints is calculated for each of the two eye images, and this proportion is used as the confidence level of the corresponding eye image. For example, if the number of target feature points in the first eye image is n and the number of glints is m, the confidence level corresponding to the first eye image is n/m.

Step 350. Determine first gaze information of a second eye image based on the target feature points of the second eye image in a case that the confidence level corresponding to a first eye image of the two eye images is less than a preset confidence level and that the confidence level corresponding to the second eye image of the two eye images is greater than or equal to the preset confidence level, and determine the first gaze information as first gaze information of the first eye image.

Step 360. Input the two eye images respectively into a gaze estimation model to obtain respective second gaze information of the two eye images output by the gaze estimation model.

Step 370. Determine target gaze information corresponding to the two eye images based on the first gaze information of the first eye image, the first gaze information of the second eye image, the second gaze information of the first eye image, and the second gaze information of the second eye image.

The specific step descriptions of step 310 and step 350 to step 370 may refer to step 210 and step 230 to step 250, and are not repeated herein.

In this embodiment, the accuracy of target feature point determination is improved by performing grayscale processing on the two eye images to obtain grayscale images corresponding to the two eye images, determining pupil boundary contour feature points from the glints based on the grayscale value difference between the glints and the pupil center in the grayscale images, and determining target feature points that satisfy a condition by performing an ellipse fitting algorithm based on the contour feature points.

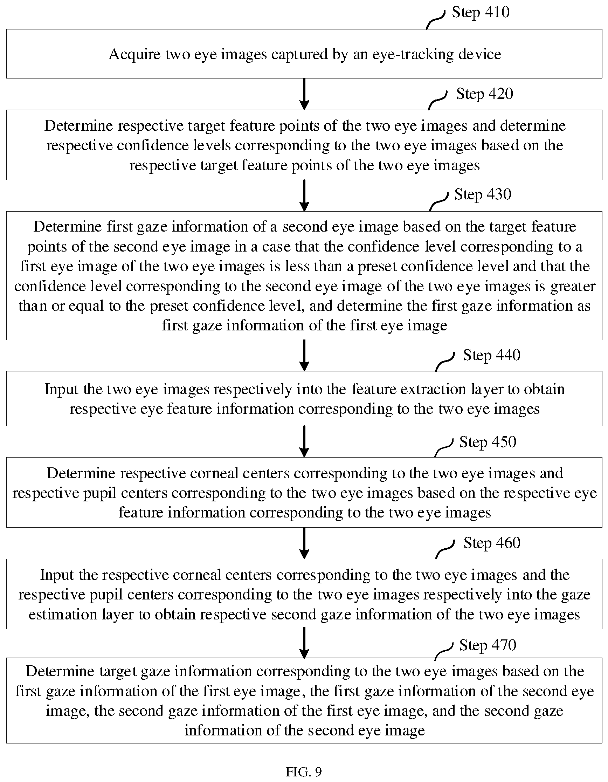

Referring to FIG. 9, FIG. 9 shows a method for determining gaze information according to an embodiment of this application. The process shown in FIG. 9 will be elaborated in detail below. The gaze estimation model includes a feature extraction layer and a gaze estimation layer, and the method for determining gaze information may specifically include the following steps.

Step 410. Acquire two eye images captured by the eye-tracking device.

Step 420. Determine respective target feature points of the two eye images and determine respective confidence levels corresponding to the two eye images based on the respective target feature points of the two eye images.

Step 430. Determine first gaze information of a second eye image based on the target feature points of the second eye image in a case that the confidence level corresponding to a first eye image of the two eye images is less than a preset confidence level and that the confidence level corresponding to the second eye image of the two eye images is greater than or equal to the preset confidence level, and determine the first gaze information as first gaze information of the first eye image.

The specific step descriptions of step 410 to step 430 may refer to step 210 to step 230, and are not repeated herein.

Step 440. Input the two eye images respectively into the feature extraction layer to obtain respective eye feature information corresponding to the two eye images.

In one approach, eye feature information includes feature information of a corneal center in an eye image, feature information of a pupil center in the eye image, feature information of glints in the eye image, and the like. Optionally, the eye feature information extracted by the feature extraction layer may be two-dimensional feature information in the eye image.

In one approach, the feature extraction layer may include a convolutional neural network. Optionally, the convolutional neural network may be a neural network composed of RepVGG operators. Optionally, the feature extraction layer may include multiple neural network blocks. For example, the feature extraction layer includes five neural network blocks, with the composition of each block as shown in the following table:

**Table 1 Composition of each neural network block**

| Block No. | Network composition | Output size |
|---|---|---|
| 1 | Structure: 1*(3×3 Conv-Relu), channels: 64 | 112*112 |
| 2 | Structure: 2*(3×3 Conv-Relu), channels: 64 | 56*56 |
| 3 | Structure: 4*(3×3 Conv-Relu), channels: 128 | 28*28 |
| 4 | Structure: 14*(3×3 Conv-Relu), channels: 256 | 14*14 |
| 5 | Structure: 1 *(3×3 Conv-Relu), channels: 512 | 7*7 |

Both the 3×3 convolution and Relu layers may be standard network layers. Using the network structure of Table 1 as the feature extraction layer offers the following advantages: 1. Using an operator combination of 3×3 convolution and ReLU activation layers as the main body of a convolutional network can effectively increase computational density. 2. A single-channel network architecture is employed, which provides high parallelism and reduces GPU memory consumption under the same computational load; and 3. The single-channel architecture offers good flexibility, allowing the network width to be adjusted through quantization techniques, and is compatible with most chips and friendly to edge devices.

Step 450. Determine respective corneal centers corresponding to the two eye images and respective pupil centers corresponding to the two eye images based on the respective eye feature information corresponding to the two eye images.

In one approach, a deconvolution layer may be set in the gaze estimation model as the gaze estimation layer, through which the respective corneal centers corresponding to the two eye images and the respective pupil centers corresponding to the two eye images may be determined.

Optionally, deconvolution is a special type of convolution, typically involving padding a matrix-formatted image with zeros according to a specific ratio to expand the size of the input image. Optionally, the network structure of the deconvolution layer is as shown in Table 2:

**Table 2 Network structure of deconvolution layer**

| Branch/block No. | Two-dimensional corneal center | | Two-dimensional glints | | Two-dimensional pupil center | |
|---|---|---|---|---|---|---|
| | Network composition | Output size | Network composition | Output size | Network composition | Output size |
| 1 | 3×3 Deconv | 512*1*1 | 3×3 Deconv | 512*1*1 | 3×3 Deconv | 512*1*1 |
| 2 | FC | 2*1 | 3×3 Deconv | 128*1*1 | 3×3 Deconv | 128*1*1 |
| 3 | - | - | FC | (2*6)*1 | FC | 2*1 |

The FC represents a fully connected network. In this deconvolution layer, three branch neural network structures are provided, respectively used for: determining a two-dimensional corneal center of an eye image based on corneal feature information; determining two-dimensional glints of an eye image based on glint (reflection point) feature information; and determining a two-dimensional pupil center of an eye image based on pupil feature information. The branch neural network structure for determining the two-dimensional corneal center has two layers of neural networks, including a 3*3 deconvolution network and a fully connected neural network. The branch neural network structure for determining two-dimensional glints has three layers of neural networks, including two 3*3 deconvolution networks with different output sizes and one fully connected neural network, where the fully connected neural network outputs six two-dimensional glints. The branch neural network structure for determining the two-dimensional pupil center has three layers of neural networks, including two 3*3 deconvolution networks with different output sizes and one fully connected neural network.

Step 460. Input the respective corneal centers corresponding to the two eye images and the respective pupil centers corresponding to the two eye images respectively into the gaze estimation layer to obtain respective second gaze information of the two eye images.

In one approach, the gaze estimation layer first converts the two-dimensional corneal center and two-dimensional glints determined in step 450 into a three-dimensional corneal center and converts the two-dimensional pupil center into a three-dimensional pupil center. An optical axis of the eye is then determined based on the three-dimensional corneal center and the three-dimensional pupil center. Then, based on a Kappa angle between the optical axis and the visual axis, a visual axis is determined from the optical axis, enabling the gaze estimation layer to estimate gaze information based on the visual axis, thereby obtaining respective second gaze information of the two eye images. Optionally, the Kappa angle typically ranges from 0 to 5 degrees (circular degrees), varying among individuals. Optionally, the Kappa angle may be preset by a user when using the eye-tracking device. Optionally, the gaze estimation layer may be constructed by a fully connected network, which may include multiple layers of fully connected network layers, or may be constructed by other neural networks, without specific limitation herein.

Step 470. Determine target gaze information corresponding to the two eye images based on the first gaze information of the first eye image, the first gaze information of the second eye image, the second gaze information of the first eye image, and the second gaze information of the second eye image.

The specific step descriptions of step 470 may refer to step 250, and are not repeated herein.

In this embodiment, when the confidence level of one of the two eye images is less than a confidence threshold, the second gaze information of the two eye images is determined using the gaze estimation model. Subsequently, the target gaze information can be determined based on the first gaze information and the second gaze information. The gaze estimation model includes a feature extraction layer and a gaze estimation layer. The feature extraction layer is capable of extracting eye feature information from the two eye images, and the gaze estimation layer is capable of determining the second gaze information based on the eye feature information extracted by the feature extraction layer. This improves the efficiency of determining the second gaze information and reduces the computational resource consumption of the eye-tracking device.

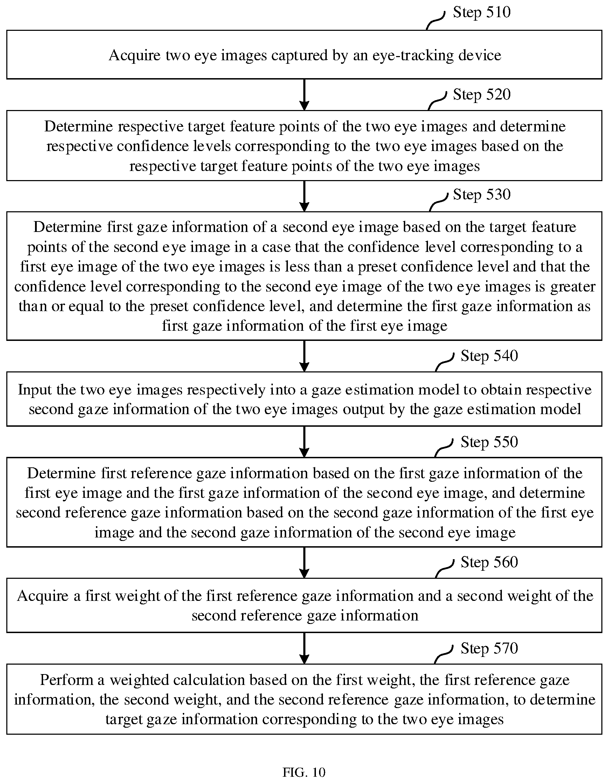

Referring to FIG. 10, FIG. 10 shows a method for determining gaze information according to an embodiment of this application. The process shown in FIG. 10 will be elaborated in detail below, and the method for determining gaze information may specifically include the following steps.

Step 510. Acquire two eye images captured by the eye-tracking device.

Step 520. Determine respective target feature points of the two eye images and determine respective confidence levels corresponding to the two eye images based on the respective target feature points of the two eye images.

Step 530. Determine first gaze information of a second eye image based on the target feature points of the second eye image in a case that the confidence level corresponding to a first eye image of the two eye images is less than a preset confidence level and that the confidence level corresponding to the second eye image of the two eye images is greater than or equal to the preset confidence level, and determine the first gaze information as first gaze information of the first eye image.

Step 540. Input the two eye images respectively into a gaze estimation model to obtain respective second gaze information of the two eye images output by the gaze estimation model.

The specific step descriptions of step 510 to step 540 may refer to step 210 to step 240, and are not repeated herein.

Step 550. Determine first reference gaze information based on the first gaze information of the first eye image and the first gaze information of the second eye image, and determine second reference gaze information based on the second gaze information of the first eye image and the second gaze information of the second eye image.

The first reference gaze information refers to gaze information obtained by fusing the first gaze information of the first eye image and the first gaze information of the second eye image. Similarly, the second reference gaze information refers to gaze information obtained by fusing the second gaze information of the first eye image and the second gaze information of the second eye image.

In one approach, a weight of influence of an eye corresponding to the first eye image on the gaze information and a weight of influence of an eye corresponding to the second eye image on gaze information may be preset. Then, the first reference gaze information may be obtained by performing a weighted calculation on the first gaze information of the first eye image and the first gaze information of the second eye image according to the respective weights. Similarly, the second reference gaze information may also be obtained by performing a weighted calculation on the second gaze information of the first eye image and the second gaze information of the second eye image according to the respective weights corresponding to each eye. Optionally, different weights may be set for calculation of the first reference gaze information and the second reference gaze information, or the same weights may be used. Optionally, the weighted calculation may be a weighted average calculation.

Step 560. Acquire a first weight of the first reference gaze information and a second weight of the second reference gaze information.

In one approach, the first weight and the second weight are weights used for determining the target gaze information. Since the first reference gaze information determined by an algorithm differs in accuracy from the second reference gaze information determined by a model, fusion is required to determine the target gaze information. Therefore, the first weight of the first reference gaze information and the second weight of the second reference gaze information are acquired.

In some embodiment, as shown in FIG. 11, step 560 includes the following steps.

Step 561. Determine a determination manner for the target gaze information.

In one approach, the determination manner for the target gaze information may refer to two different manners. One manner is to determine the target gaze information by fusing the gaze information obtained based on an algorithm (rule) with the gaze information determined by the model; and another manner is to use the first reference gaze information determined based on the algorithm as the target gaze information when a single output is selected. Optionally, when a single output is selected, the second reference gaze information may be used as the target gaze information.

Step 562. Determine the first reference gaze information as the target gaze information in a case that the determination manner is a first manner.

In one approach, the determination manner is set by a user when using the eye-tracking device. Optionally, a selection switch may be provided on the eye-tracking device, through which the user selects the determination manner for the target gaze information. When the user selects the first manner, flag information for the first manner is generated correspondingly, and in determining the target gaze information, the first reference gaze information is used as the target gaze information based on this flag information.

Step 563. Acquire the first weight of the first reference gaze information and the second weight of the second reference gaze information in a case that the determination manner is a second manner.

In one approach, when the user selects the second manner for determining the target gaze information through the selection switch on the eye-tracking device, flag information for the second manner is generated correspondingly, and in determining the target gaze information, it is determined based on this flag information that fusion of gaze information determined by the algorithm and the model is required to determine the target gaze information. Therefore, the first weight of the first reference gaze information and the second weight of the second reference gaze information may be acquired based on this flag information.

Continuing to refer to FIG. 10. Step 570. Perform a weighted calculation based on the first weight, the first reference gaze information, the second weight, and the second reference gaze information, to determine target gaze information corresponding to the two eye images.

In one approach, if the determination manner is the second determination manner, a weighted calculation is performed on the first reference gaze information and the second reference gaze information respectively based on the first weight and the second weight to determine the target gaze information. Optionally, the first weight and the second weight may be preset with different values or may be the same. Optionally, the first weight and the second weight may be normalized to obtain dynamic weights.

In this embodiment, first reference gaze information is determined based on the determined first gaze information of the first eye image and the first gaze information of the second eye image, and second reference gaze information is determined based on the determined second gaze information of the first eye image and the second gaze information of the second eye image. Then, based on the determination manner for the target gaze information, it is decided whether to use the first reference gaze information as the target gaze information or to perform a weighted calculation on the first reference gaze information and the second reference gaze information to determine the target gaze information. This can enhance user experience and improve the efficiency of determining the target gaze information when the user takes the computational resources of the eye-tracking device into account.

The following describes an apparatus embodiment of this application, which can be used to execute the methods in the above embodiments of this application. For details not disclosed in the apparatus embodiment of this application, refer to the method embodiments described above.

FIG. 12 is a block diagram of an apparatus for determining gaze information according to an embodiment of this application, applied to an eye-tracking device. As shown in FIG. 12, the apparatus 600 for determining gaze information includes: an image acquisition module 610, a target feature point determination module 620, a first gaze information determination module 630, a second gaze information determination module 640, and a target gaze information determination module 650.

The image acquisition module is configured to acquire two eye images acquired by the eye-tracking device. The target feature point determination module is configured to determine respective target feature points of the two eye images and determine respective confidence levels corresponding to the two eye images based on the respective target feature points of the two eye images. The first gaze information determination module is configured to determine first gaze information of a second eye image based on the target feature points of the second eye image in a case that the confidence level corresponding to a first eye image of the two eye images is less than a preset confidence level and that the confidence level corresponding to the second eye image of the two eye images is greater than or equal to the preset confidence level, and determine the first gaze information as first gaze information of the first eye image. The second gaze information determination module is configured to input the two eye images respectively into a gaze estimation model to obtain respective second gaze information of the two eye images output by the gaze estimation model. The target gaze information determination module is configured to determine target gaze information corresponding to the two eye images based on the first gaze information of the first eye image, the first gaze information of the second eye image, the second gaze information of the first eye image, and the second gaze information of the second eye image.

In some embodiments, the target feature point determination module includes: a grayscale processing submodule configured to perform grayscale processing on the two eye images respectively to obtain respective grayscale images corresponding to the two eye images. The target feature point determination submodule is configured to determine glints in the respective grayscale images corresponding to the two eye images and determine target feature points from the glints included in the respective grayscale images corresponding to the two eye images, where the target feature points are points among the glints that satisfy a condition. The confidence level determination submodule is configured to determine respective confidence levels corresponding to the two eye images based on a number of the glints and a number of the target feature points included in the respective grayscale images corresponding to the two eye images.

In some embodiments, for the respective grayscale images corresponding to the two eye images, the target feature point determination submodule includes: a reference pupil center determination unit configured to determine a reference pupil center in the grayscale image; a grayscale difference calculation unit configured to calculate a grayscale difference between the reference pupil center and each of the glints in the grayscale image; a contour reference point determination unit configured to determine glints with a grayscale difference greater than a difference threshold as contour reference points; and a target feature point determination unit configured to determine the target feature points from the contour reference points using an ellipse fitting method.

In some embodiments, the first gaze information determination module includes: a pupil center determination submodule configured to determine a pupil center of the second eye image based on the target feature points of the second eye image; an iris region determination submodule configured to determine an iris region in a grayscale image of the second eye image based on the pupil center; a maximum grayscale value determination submodule configured to determine, in the grayscale image of the second eye image, a maximum grayscale value of the pupil in the second eye image; a reference iris edge point determination submodule configured to determine reference iris edge points of the second eye image based on the maximum grayscale value and the iris region; an iris center determination submodule configured to determine an iris center of the second eye image using an ellipse fitting method based on the reference iris edge points; and a first gaze information determination submodule configured to determine the first gaze information of the second eye image based on the pupil center and the iris center and determine the first gaze information as the first gaze information of the first eye image.

In some embodiments, the second gaze information determination module includes: an eye feature information extraction submodule configured to input the two eye images respectively into the feature extraction layer to obtain respective eye feature information corresponding to the two eye images; a determination submodule configured to determine respective corneal centers corresponding to the two eye images and respective pupil centers corresponding to the two eye images based on the respective eye feature information corresponding to the two eye images; and a second gaze information determination submodule configured to input the respective corneal centers corresponding to the two eye images and the respective pupil centers corresponding to the two eye images respectively into the gaze estimation layer to obtain respective second gaze information of the two eye images.

In some embodiments, the target gaze information determination module includes: a reference gaze information determination submodule configured to determine first reference gaze information based on the first gaze information of the first eye image and the first gaze information of the second eye image, and determine second reference gaze information based on the second gaze information of the first eye image and the second gaze information of the second eye image; a weight acquisition submodule configured to acquire the first weight of the first reference gaze information and the second weight of the second reference gaze information; and a target gaze information determination submodule configured to perform a weighted calculation based on the first weight, the first reference gaze information, the second weight, and the second reference gaze information, to determine target gaze information corresponding to the two eye images.

In some embodiments, the weight acquisition submodule includes: a determination manner determination unit configured to determine a determination manner for the target gaze information; a target gaze information determination unit configured to determine the first reference gaze information as the target gaze information in a case that the determination manner is a first manner; and a weight acquisition unit configured to acquire the first weight of the first reference gaze information and the second weight of the second reference gaze information in a case that the determination manner is a second manner.

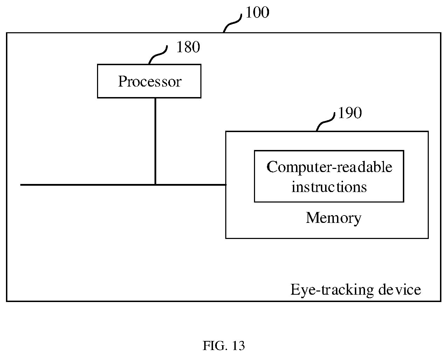

According to an aspect of embodiments of this application, an eye-tracking device is further provided, as shown in FIG. 13. The eye-tracking device 100 includes a processor 180 and one or more memories 190. The one or more memories 190 are configured to store program instructions executed by the processor 180. When the processor 180 executes the program instructions, the method for determining gaze information described above is implemented.

Further, the processor 180 may include one or more processing cores. The processor 180 runs or executes instructions, programs, code sets, or instruction sets stored in the memory 190 and calls data stored in the memory 190. Optionally, the processor 180 may use at least one hardware form of digital signal processing (Digital Signal Processing, DSP), field-programming gate array (Field-Programmable Gate Array, FPGA), and programmable logic array (Programmable Logic Array, PLA) to implement. The processor 180 may integrate one or more of a central processing unit (Central Processing Unit, CPU), a graphics processing unit (Graphics Processing Unit, GPU), and a modem. The CPU mainly handles the operating system, user interfaces, and application programs; the GPU is responsible for rendering and drawing of the content to be displayed; and the modem is used for processing wireless communication. It can be understood that the modem may not be integrated into the processor, and may be implemented by a single communication chip.

According to an aspect of this application, this application further provides a computer-readable storage medium. The computer-readable medium may be included in the electronic device described in the above embodiments or may exist independently without being assembled into the eye-tracking device. The computer-readable storage medium carries computer-readable instructions. The stored computer-readable instructions, when executed by a processor, implement the method in any of the above embodiments.

It should be noted that the computer-readable medium shown in the embodiments of this application may be a computer-readable signal medium, a computer-readable storage medium, or any combination thereof. The computer-readable storage medium may for example be, but not limited to, electrical, magnetic, optic, electromagnetic, infrared, or semiconductor system, apparatus, or means, or any combination of the above. More specific examples of the computer-readable storage medium may include but are not limited to: electrical connection having one or more wire, portable computer magnetic disk, hard disk drive, random access memory (RAM), read only memory (ROM), erasable programmable read only memory (Erasable Programmable Read Only Memory, EPROM), flash memory, optical fiber, portable compact disc read only memory (Compact Disc Read-Only Memory, CD-ROM), optical storage means, magnetic storage means, or any suitable combination of the above. In this application, the computer-readable storage medium may be any tangible medium that contains or stores a program for use by or in combination with an instruction execution system, apparatus, or device. In this application, the computer-readable signal medium may include a data signal that is propagated in baseband or as part of a carrier wave, in which the computer-readable program code is carried. Such propagated data signal may take a number of forms, including, but not limited to, electromagnetic signal, optic signal, or any suitable combination of the above. The computer-readable signal medium may also be any computer-readable medium except for the computer-readable storage medium, and that computer-readable medium can transmit, propagate, or transport a program for use by or in combination with an instruction execution system, apparatus, or device. The program code contained in the computer-readable medium may be transmitted using any appropriate medium, including, but not limited to, wireless, wire, or the like, or any suitable combination of the above.

It should be noted that, although several modules or units of a device for action execution are mentioned in the detailed description above, such division is not mandatory. In fact, according to the embodiments of this application, the features and functions of two or more modules or units described above may be embodied in one module or unit. Conversely, the features and functions of a module or unit described above can be further divided into multiple modules or units to be embodied.

Persons skilled in the art can easily figure out other implementation solutions of this application after considering the specification and practicing the embodiments disclosed herein. This application is intended to cover any variations, functions, or adaptive changes of this application. These variations, functions, or adaptive changes comply with general principles of this application, and include common knowledge or a commonly used technical means in the technical field that is not disclosed in this application.

It should be understood that this application is not limited to the accurate structures described in the foregoing and shown in the accompanying drawings, and various modifications and changes may be made without departing from the scope of this application. The scope of this application is limited only by the appended claims.

**Claims**

1. A method for determining gaze information, applied to an eye-tracking device, **characterized in that** the method comprises:

acquiring two eye images captured by the eye-tracking device;

determining respective target feature points of the two eye images and determining respective confidence levels corresponding to the two eye images based on the respective target feature points of the two eye images;

determining first gaze information of the second eye image based on the target feature points of the second eye image in a case that the confidence level corresponding to a first eye image of the two eye images is less than a preset confidence level and that the confidence level corresponding to a second eye image of the two eye images is greater than or equal to the preset confidence level, and determining the first gaze information as first gaze information of the first eye image;

inputting the two eye images respectively into a gaze estimation model to obtain respective second gaze information of the two eye images output by the gaze estimation model; and

determining target gaze information corresponding to the two eye images based on the first gaze information of the first eye image, the first gaze information of the second eye image, the second gaze information of the first eye image, and the second gaze information of the second eye image.

2. The method according to claim 1, **characterized in that** the determining respective target feature points of the two eye images and determining respective confidence levels corresponding to the two eye images based on the respective target feature points of the two eye images comprises:

performing grayscale processing on the two eye images respectively to obtain respective grayscale images corresponding to the two eye images;

determining glints in the respective grayscale images corresponding to the two eye images and determining target feature points from the glints comprised in the respective grayscale images corresponding to the two eye images, wherein the target feature points are points among the glints that satisfy a condition; and

determining respective confidence levels corresponding to the two eye images based on a number of the glints and a number of the target feature points comprised in the respective grayscale images corresponding to the two eye images.

3. The method according to claim 2, **characterized in that**, for the respective grayscale images corresponding to the two eye images, the determining glints in the respective grayscale images corresponding to the two eye images and determining target feature points from the glints comprised in the respective grayscale images corresponding to the two eye images comprises:

determining a reference pupil center in the grayscale image;

calculating a grayscale difference between the reference pupil center and each of the glints in the grayscale image;

determining glints with a grayscale difference greater than a difference threshold as contour reference points; and

determining the target feature points from the contour reference points using an ellipse fitting method.

4. The method according to claim 1, **characterized in that** the determining first gaze information of the second eye image based on the target feature points of the second eye image and determining the first gaze information as first gaze information of the first eye image comprises:

determining a pupil center of the second eye image based on the target feature points of the second eye image;

determining an iris region in a grayscale image of the second eye image based on the pupil center;

determining, in the grayscale image of the second eye image, a maximum grayscale value of the pupil in the second eye image;

determining reference iris edge points of the second eye image based on the maximum grayscale value and the iris region;

determining an iris center of the second eye image using an ellipse fitting method based on the reference iris edge points; and

determining the first gaze information of the second eye image based on the pupil center and the iris center and determining the first gaze information as the first gaze information of the first eye image.

5. The method according to claim 1, **characterized in that** the gaze estimation model comprises a feature extraction layer and a gaze estimation layer, and the inputting the two eye images respectively into a gaze estimation model to obtain respective second gaze information of the two eye images output by the gaze estimation model comprises:

inputting the two eye images respectively into the feature extraction layer to obtain respective eye feature information corresponding to the two eye images;

determining respective corneal centers corresponding to the two eye images and respective pupil centers corresponding to the two eye images based on the respective eye feature information corresponding to the two eye images; and

inputting the respective corneal centers corresponding to the two eye images and the respective pupil centers corresponding to the two eye images respectively into the gaze estimation layer to obtain respective second gaze information of the two eye images.

6. The method according to claim 1, **characterized in that** the determining target gaze information corresponding to the two eye images based on the first gaze information of the first eye image, the first gaze information of the second eye image, the second gaze information of the first eye image, and the second gaze information of the second eye image comprises:

determining first reference gaze information based on the first gaze information of the first eye image and the first gaze information of the second eye image, and determining second reference gaze information based on the second gaze information of the first eye image and the second gaze information of the second eye image;

acquiring a first weight of the first reference gaze information and a second weight of the second reference gaze information; and

performing a weighted calculation based on the first weight, the first reference gaze information, the second weight, and the second reference gaze information, to determine target gaze information corresponding to the two eye images.

7. The method according to claim 6, **characterized in that** the acquiring a first weight of the first reference gaze information and a second weight of the second reference gaze information comprises:

determining a determination manner for the target gaze information;

determining the first reference gaze information as the target gaze information in a case that the determination manner is a first manner; and

acquiring the first weight of the first reference gaze information and the second weight of the second reference gaze information in a case that the determination manner is a second manner.

8. An apparatus for determining gaze information, applied to an eye-tracking device, **characterized in that** the apparatus comprises:

an image acquisition module configured to acquire two eye images captured by the eye-tracking device;

a target feature point determination module configured to determine respective target feature points of the two eye images and determine respective confidence levels corresponding to the two eye images based on the respective target feature points of the two eye images;

a first gaze information determination module configured to determine first gaze information of a second eye image based on the target feature points of the second eye image in a case that the confidence level corresponding to a first eye image of the two eye images is less than a preset confidence level and that the confidence level corresponding to the second eye image of the two eye images is greater than or equal to the preset confidence level, and determine the first gaze information as first gaze information of the first eye image;

a second gaze information determination module configured to input the two eye images respectively into a gaze estimation model to obtain respective second gaze information of the two eye images output by the gaze estimation model; and

a target gaze information determination module configured to determine target gaze information corresponding to the two eye images based on the first gaze information of the first eye image, the first gaze information of the second eye image, the second gaze information of the first eye image, and the second gaze information of the second eye image.

9. An eye-tracking device, **characterized in that** the eye-tracking device comprises: an image capture apparatus and a device body, the image capture apparatus being disposed at a target position of the device body, wherein the target position is a position located at a cheek side and/or a nose side of a target object when the eye-tracking device is worn by the target object.

10. The eye-tracking device according to claim 9, **characterized in that** the image capture apparatus performs eye image capture at a target tilt angle, wherein the target tilt angle is greater than 50 degrees.

FIG. 1

FIG. 2

FIG. 3

Step 210

Acquire two eye images captured by an eye-tracking device

Step 220

Determine respective target feature points of the two eye images and determine respective confidence levels corresponding to the two eye images based on the respective target feature points of the two eye images

Step 230

Determine first gaze information of a second eye image based on the target feature points of the second eye image in a case that the confidence level corresponding to a first eye image of the two eye images is less than a preset confidence level and that the confidence level corresponding to the second eye image of the two eye images is greater than or equal to the preset confidence level, and determine the first gaze information as first gaze information of the first eye image

Step 240

Input the two eye images respectively into a gaze estimation model to obtain respective second gaze information of the two eye images output by the gaze estimation model

Step 250

Determine target gaze information corresponding to the two eye images based on the first gaze information of the first eye image, the first gaze information of the second eye image, the second gaze information of the first eye image, and the second gaze information of the second eye image

FIG. 4

Step 231

Determine a pupil center of a second eye image based on target feature points of the second eye image

Step 232

Determine an iris region in a grayscale image of the second eye image based on the pupil center

Step 233

Determine, in the grayscale image of the second eye image, a maximum grayscale value of the pupil in the second eye image

Step 234

Determine reference iris edge points of the second eye image based on the maximum grayscale value and the iris region

Step 235

Determine an iris center of the second eye image using an ellipse fitting method based on the reference iris edge points

Step 236

Determine the first gaze information of the second eye image based on the pupil center and the iris center and determine the first gaze information as the first gaze information of the first eye image

FIG. 5

FIG. 6

Step 310

Acquire two eye images captured by an eye-tracking device

Step 320

Perform grayscale processing on the two eye images respectively to obtain respective grayscale images corresponding to the two eye images

Step 330

Determine glints in the respective grayscale images corresponding to the two eye images and determine target feature points from the glints included in the respective grayscale images corresponding to the two eye images, where the target feature points are points among the glints that satisfy a condition

Step 340

Determine respective confidence levels corresponding to the two eye images based on a number of the glints and a number of the target feature points included in the respective grayscale images corresponding to the two eye images

Step 350

Determine first gaze information of a second eye image based on the target feature points of the second eye image in a case that the confidence level corresponding to a first eye image of the two eye images is less than a preset confidence level and that the confidence level corresponding to the second eye image of the two eye images is greater than or equal to the preset confidence level, and determine the first gaze information as first gaze information of the first eye image

Step 360

Input the two eye images respectively into a gaze estimation model to obtain respective second gaze information of the two eye images output by the gaze estimation model

Step 370

Determine target gaze information corresponding to the two eye images based on the first gaze information of the first eye image, the first gaze information of the second eye image, the second gaze information of the first eye image, and the second gaze information of the second eye image

FIG. 7

Step 331

Determine a reference pupil center in the grayscale image

Step 332

Calculate a grayscale difference between the reference pupil center and each of The glints in the grayscale image

Step 333

Determine glints with a grayscale difference greater than a difference threshold as contour reference points

Step 334

Determine the target feature points from the contour reference points using an ellipse fitting method

FIG. 8

Step 410

Acquire two eye images captured by an eye-tracking device

Step 420

Determine respective target feature points of the two eye images and determine respective confidence levels corresponding to the two eye images based on the respective target feature points of the two eye images

Step 430

Determine first gaze information of a second eye image based on the target feature points of the second eye image in a case that the confidence level corresponding to a first eye image of the two eye images is less than a preset confidence level and that the confidence level corresponding to the second eye image of the two eye images is greater than or equal to the preset confidence level, and determine the first gaze information as first gaze information of the first eye image

Step 440

Input the two eye images respectively into the feature extraction layer to obtain respective eye feature information corresponding to the two eye images

Step 450

Determine respective corneal centers corresponding to the two eye images and respective pupil centers corresponding to the two eye images based on the respective eye feature information corresponding to the two eye images

Step 460

Input the respective corneal centers corresponding to the two eye images and the respective pupil centers corresponding to the two eye images respectively into the gaze estimation layer to obtain respective second gaze information of the two eye images

Step 470

Determine target gaze information corresponding to the two eye images based on the first gaze information of the first eye image, the first gaze information of the second eye image, the second gaze information of the first eye image, and the second gaze information of the second eye image

FIG. 9

Step 510

Acquire two eye images captured by an eye-tracking device

Step 520

Determine respective target feature points of the two eye images and determine respective confidence levels corresponding to the two eye images based on the respective target feature points of the two eye images

Step 530

Determine first gaze information of a second eye image based on the target feature points of the second eye image in a case that the confidence level corresponding to a first eye image of the two eye images is less than a preset confidence level and that the confidence level corresponding to the second eye image of the two eye images is greater than or equal to the preset confidence level, and determine the first gaze information as first gaze information of the first eye image

Step 540

Input the two eye images respectively into a gaze estimation model to obtain respective second gaze information of the two eye images output by the gaze estimation model

Step 550

Determine first reference gaze information based on the first gaze information of the first eye image and the first gaze information of the second eye image, and determine second reference gaze information based on the second gaze information of the first eye image and the second gaze information of the second eye image

Step 560

Acquire a first weight of the first reference gaze information and a second weight of the second reference gaze information

Step 570

Perform a weighted calculation based on the first weight, the first reference gaze information, the second weight, and the second reference gaze information, to determine target gaze information corresponding to the two eye images

FIG. 10

Step 561

Determine a determination manner for the target gaze information

Step 562

Determine the first reference gaze information as the target gaze information in a case that the determination manner is a first manner

Step 563

Acquire the first weight of the first reference gaze information and the second weight of the second reference gaze information in a case that the determination manner is a second manner

FIG. 11

600

Image acquisition module — 610

Target feature point determination module — 620

First gaze information determination module — 630

Second gaze information determination module — 640

Target gaze information determination module — 650

FIG. 12

FIG. 13

## INTERNATIONAL SEARCH REPORT

| | International application No. |
|---|---|
| | **PCT/CN2023/138591** |

**A.  CLASSIFICATION OF SUBJECT MATTER**

G06V40/18(2022.01)i;  G06N3/0464(2023.01)i;  G06N3/08(2023.01)i;  G06V10/764(2022.01)i;  G06V10/82(2022.01)i

According to International Patent Classification (IPC) or to both national classification and IPC

**B.  FIELDS SEARCHED**

Minimum documentation searched (classification system followed by classification symbols)

IPC:  G06V; G06N

Documentation searched other than minimum documentation to the extent that such documents are included in the fields searched

Electronic data base consulted during the international search (name of data base and, where practicable, search terms used)

CNABS; CNTXT; DWPI; VEN; USTXT; WOTXT; EPTXT; CNKI; IEEE: 注视, 视线, 眼, 图像, 追踪, 跟踪, 特征点, 光斑, 椭圆, 置信度, 估计, 检测, 模型, 准确性, gaze, sight, eye, image, track, feature point, light spot, ellipse, confidence, estimate, detect, model, accuracy

**C.  DOCUMENTS CONSIDERED TO BE RELEVANT**

| Category* | Citation of document, with indication, where appropriate, of the relevant passages | Relevant to claim No. |
|---|---|---|
| PX | CN 115937959 A (NANCHANG VIRTUAL REALITY RESEARCH INSTITUTE CO., LTD.) 07 April 2023 (2023-04-07) claims 1-10, and description, paragraphs 26-137 | 1-10 |
| X | US 2021019493 A1 (SONY CORP.) 21 January 2021 (2021-01-21) description, paragraphs 73-330, and figures 2, 5, and 11 | 9-10 |
| Y | US 2021019493 A1 (SONY CORP.) 21 January 2021 (2021-01-21) description, paragraphs 73-330, and figures 2, 5, and 11 | 1-8 |
| Y | CN 111902070 A (TOBII AB) 06 November 2020 (2020-11-06) description, paragraphs 111-231 | 1-8 |
| X | CN 114428547 A (BEIJING 7INVENSUN TECHNOLOGY CO., LTD. et al.) 03 May 2022 (2022-05-03) description, paragraphs 25-100 | 9-10 |
| Y | CN 114428547 A (BEIJING 7INVENSUN TECHNOLOGY CO., LTD. et al.) 03 May 2022 (2022-05-03) description, paragraphs 25-100 | 1-8 |

☑ Further documents are listed in the continuation of Box C.  ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **02 April 2024** | **04 April 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| International application No. |
|---|
| **PCT/CN2023/138591** |

**C.     DOCUMENTS CONSIDERED TO BE RELEVANT**

| Category* | Citation of document, with indication, where appropriate, of the relevant passages | Relevant to claim No. |
|---|---|---|
| A | CN 112101065 A (BEIJING 7INVENSUN TECHNOLOGY CO., LTD. et al.) 18 December 2020 (2020-12-18) <br> entire document | 1-10 |
| A | US 10884494 B1 (MICROSOFT TECHNOLOGY LICENSING LLC.) 05 January 2021 (2021-01-05) <br> entire document | 1-10 |

## INTERNATIONAL SEARCH REPORT
### Information on patent family members

International application No.

**PCT/CN2023/138591**

| Patent document cited in search report | | | Publication date (day/month/year) | Patent family member(s) | | | Publication date (day/month/year) |
|---|---|---|---|---|---|---|---|
| CN | 115937959 | A | 07 April 2023 | None | | | |
| US | 2021019493 | A1 | 21 January 2021 | WO | 2019187808 | A1 | 03 October 2019 |
| | | | | JPWO | 2019187808 | A1 | 01 April 2021 |
| | | | | JP | 7388349 | B2 | 29 November 2023 |
| CN | 111902070 | A | 06 November 2020 | WO | 2019050543 | A1 | 14 March 2019 |
| | | | | US | 2020183490 | A1 | 11 June 2020 |
| | | | | EP | 4137037 | A1 | 22 February 2023 |
| | | | | EP | 3681371 | B1 | 30 November 2022 |
| | | | | EP | 4137038 | A1 | 22 February 2023 |
| | | | | ES | 2936093 | T3 | 14 March 2023 |
| | | | | EP | 3681371 | A1 | 22 July 2020 |
| CN | 114428547 | A | 03 May 2022 | None | | | |
| CN | 112101065 | A | 18 December 2020 | None | | | |
| US | 10884494 | B1 | 05 January 2021 | EP | 4088173 | A1 | 16 November 2022 |
| | | | | WO | 2021141694 | A1 | 15 July 2021 |

Form PCT/ISA/210 (patent family annex) (July 2022)